# EUROPÄISCHE PATENTANMELDUNG

(11) **EP 2 966 003 A1**
(43) Veröffentlichungstag der Anmeldung: **13.01.2016**
(21) Anmeldenummer: 15450025.0
(22) Anmeldetag: 25.06.2015
(51) Int. Cl.: B65D 73/00

(54) **EINRICHTUNG FÜR DEN TRANSPORT, DEN VERTRIEB, DIE AUFBEWAHRUNG U.DGL. VON PLÄTTCHEN**

(30) Priorität: 07.07.2014 AT 5372014
(71) Anmelder: Günter Gasser GmbH, 6973 Höchst (Vgb.) (AT)
(72) Erfinder: Gasser, Günter, 6973 Höchst (Vbg.) (AT)
(74) Vertreter: Beer & Partner Patentanwälte KG

(57) **Zusammenfassung**

Einrichtung für den Transport, den Vertrieb, die Aufbewahrung u.dgl. von mindestens einem Plättchen, welches ein Medium enthält, durch welches die physiologischen, medizinischen u.dgl. Eigenschaften von Lebewesen, insbesondere von Personen, bzw. die technischen, physikalischen, chemischen u.dgl. Eigenschaften von technischen Geräten, Stoffen, Materialien u.dgl. beeinflussbar sind. Diese Einrichtung besteht aus einem kartenförmigen Träger (1) aus Kunststoff, Karton, Papier od.dgl., auf welchem mindestens eines der Plättchen (2), welches an einer seiner beiden Flächen mit einer Klebeschicht versehen ist, von diesem leicht ablösbar befestigt ist.

## Beschreibung

Die gegenständliche Erfindung betrifft eine Einrichtung für den Transport, den Vertrieb, die Aufbewahrung u.dgl. von mindestens einem Plättchen, welches ein Medium enthält, durch welches die physiologischen, medizinischen u.dgl. Eigenschaften von Lebewesen, insbesondere von Personen, bzw. die technischen, physikalischen, chemischen u.dgl. Eigenschaften von technischen Geräten, Stoffen, Materialien u.dgl. beeinflussbar sind.

Es ist bekannt, dass es möglich ist, Lebewesen, insbesondere Personen in ihren Eigenschaften, in ihrem Verhalten, in ihrem Befinden u.dgl. bzw. technische Geräte in ihren Eigenschaften durch Medien zu beeinflussen. Es wird hierzu bemerkt, dass diese Effekte außerhalb der messbaren Bereiche liegen und deshalb wissenschaftlich nicht nachweisbar sind. Vielmehr sind diese Effekte nur empirisch feststellbar. Weitere Erläuterungen zu diesem Sachverhalt erübrigen sich deshalb, weil dieser als solcher nicht Gegenstand der gegenständlichen Erfindung ist.

Der gegenständlichen Erfindung liegt die Aufgabe zugrunde, eine Einrichtung für den Transport, den Vertrieb, die Aufbewahrung u.dgl. von Plättchen, welche ein derartiges Medium enthalten, zu schaffen, um diese Plättchen vertreiben zu können und sie jederzeit zur Verfügung zu haben, sobald sie zur Anwendung gebracht werden sollen.

Dies wird erfindungsgemäß durch einen kartenförmigen Träger erzielt, welcher aus Kunststoff, Karton, Papier od.dgl. besteht und auf welchem mindestens ein Plättchen, welches an einer seiner beiden Flächen mit einer Klebeschicht versehen ist, von diesem leicht ablösbar befestigt ist.

Nach einer bevorzugten Ausführungsform weist der Träger die Form einer Kreditkarte auf. Dabei kann der Träger auf einer seiner beiden Oberseiten mit mindestens einer Ausnehmung versehen sein, innerhalb welcher sich das ablösbare Plättchen befindet. Insbesondere können auf dem Träger mehrere Plättchen, insbesondere zwei Plättchen, leicht ablösbar befestigt sein. Dabei 2 kann das mindestens eine Plättchen kreisrund, oval, polygonal und in Form einer Figur od.dgl. ausgebildet sein.

Vorzugsweise ist der Träger mit einer mittleren Schicht ausgebildet, auf welcher die Klebeschicht des Plättchens nur wenig haftet, wodurch dieses vom Träger leicht ablösbar ist. Zudem kann das mindestens eine Plättchen an seiner Oberseite mit einer Beschriftung, mit Symbolen, mit einer Grafik u.dgl. versehen sein. Weiters kann auch der Träger an mindestens einer seiner Oberflächen mit einer Beschriftung, mit Symbolen, mit einer Grafik u.dgl. versehen sein.

Der Gegenstand der Erfindung ist nachstehend anhand eines in der Zeichnung dargestellten Ausführungsbeispiels näher erläutert. Es zeigen:
- FIG.1: eine erfindungsgemäße Einrichtung, in axonometrischer Darstellung, und
- FIG.2: eine erfindungsgemäße Einrichtung, in auseinander gezogener axonometrischer Darstellung.

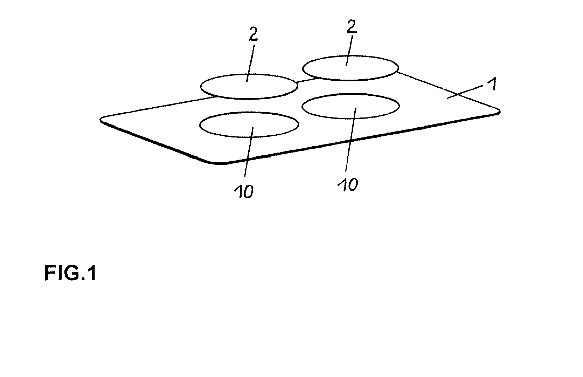

In FIG. 1 ist eine Karte 1 dargestellt, welche aus mehreren Schichten besteht, wobei ein Teil dieser Schichten aus Kunststoff, Karton, Papier od.dgl. besteht und sich zwischen diesen Schichten mindestens eine Schicht mit einem Wirkstoff, durch welchen Lebewesen, insbesondere Personen, technische Geräte, Stoffe, Materialien beeinflussbar sind, befindet.

An ihrer oberen Seite ist diese Karte 1 mit zwei kreisrunden Ausnehmungen 10 ausgebildet, in welchen sich jeweils ein kreisrundes Plättchen 2 befindet, welche an einer mittleren Schicht dieser Karte 1 leicht lösbar befestigt sind. Die Karte 1 weist vorzugsweise die Form und die Größe einer Scheckkarte auf.

Die Plättchen 2 enthalten einen Wirkstoff, welcher Lebewesen, insbesondere Personen, in ihrem Verhalten, Befinden u.dgl. beeinflusst und gegenüber störenden Einflüssen schützt bzw. technische Geräte, Stoffe, Materialien u.dgl. in deren Eigenschaften bzw. Wirkungen beeinflusst. Da diese Sachverhalte außerhalb der messbaren Bereiche liegen sind sie medizinisch, physiologisch u.dgl. bzw. technisch einer Bewertung nicht zugänglich. Diese Medien bzw. deren Wirkungen für sich stellen kein Merkmal der gegenständlichen Erfindung dar. Vielmehr besteht die gegenständliche Erfindung in einer Einrichtung, welche als Träger für Plättchen 2 dient, welche an Personen oder technischen Geräten u.dgl. angebracht werden können, um diese medizinisch, physiologisch u.dgl. bzw. technisch zu beeinflussen und um Schädigungen von Lebewesen bzw. Geräten zu vermeiden.

Sobald eine Karte 1, welche aus einer Vielzahl von Schichten besteht, durch Verpressung und Verschweißung dieser Schichten miteinander hergestellt worden ist, werden mittels Laserstrahlen von oben her zwei kreisrunde Schnitte vorgenommen, durch welche die Plättchen 2 von der Karte 1 getrennt werden. Hierdurch können sie bei Bedarf aus der Karte 1 herausgelöst werden. Diese Plättchen 2 enthalten solche Wirkstoffe, durch welche Lebewesen, insbesondere Personen, in ihren Eigenschaften, in ihrem Verhalten, in ihrem Befinden u.dgl. bzw. technische Geräte in ihren Eigenschaften beeinflusst werden und Schädigungen von Lebewesen, insbesondere Personen, und Geräten verhindert werden.

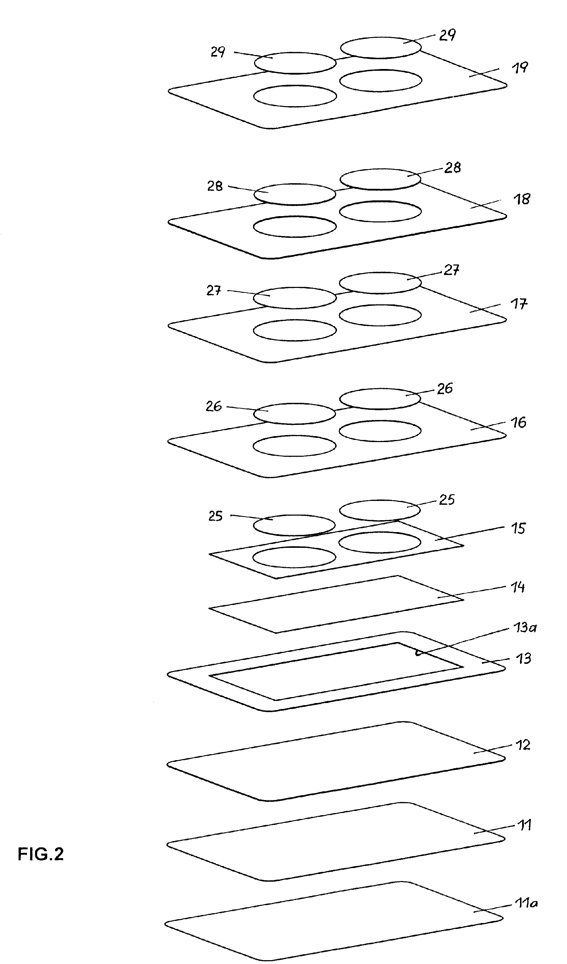

Nachstehend ist anhand der FIG.2 die Ausbildung einer derartigen Karte 1 näher erläutert:

Die Karte 1 weist an ihrer Unterseite eine aus Kunststoff hergestellte erste Trägerschicht 11 mit einer Dicke von etwa 0,2 mm auf, welche an ihrer unteren Oberfläche mit einem Aufdruck versehen ist, wobei dieser Aufdruck durch eine Deckschicht 11a aus einer Kunststofffolie mit einer Dicke von etwa 0,075 mm geschützt ist.

Über der Trägerschicht 11 befindet sich eine Funktionsschicht 12 mit Mineralstoffen, durch welche bei Lebewesen, insbesondere Personen, physiologische, medizinische u.dgl. Wirkungen und Schutzwirkungen bzw. bei technischen Geräten, Stoffen, Substanzen u.dgl. technische Wirkungen erzielt werden.

Diese Funktionsschicht 12 besteht aus einem Kunststoff, in welchen die Mineralstoffe eingeschmolzen sind.

Über der Funktionsschicht 12 befindet sich ein Stabilisierungsrahmen 13, welcher aus einer Kunststofffolie mit einer Dicke von etwa 0,125 mm besteht. Innerhalb des Stabilisierungsrahmens 13 befindet sich eine Nichthaftschicht 14. Auf der Nichthaftschicht 14 befindet sich eine Verbundfolie 15, welche an ihrer Unterseite mit einem Klebstoff versehen ist. Die Nichthaftschicht 14 und die Schicht 15, welche in ihren Ausmaßen der im Stabilisierungsrahmen 13 befindlichen rechteckigen Ausnehmung 13a entsprechen, sind in diese Ausnehmung 13a eingesetzt. Über dem Stabilisierungsrahmen 13 bzw. der Nichthaftschicht 14 und der Verbundfolie 15 befindet sich eine zweite Trägerschicht 16 aus einer Kunststofffolie mit einer Dicke von 0,1 mm. Über der zweiten Trägerschicht 16 befindet sich eine weitere Funktionsschicht 17 mit Mineralstoffen, durch welche gleichfalls physiologische, medizinische u.dgl. Wirkungen bzw. Schutzwirkungen und technische Wirkungen erzielt werden. Auch die Funktionsschicht besteht aus einem Kunststoff, in welchen Mineralien eingeschmolzen sind. Darüber befindet sich eine weitere Trägerschicht 18 aus einer Kunststofffolie mit einer Dicke von etwa 0,2 mm. Die Trägerschicht 18 ist an ihrer Oberseite bedruckt. Darüber befindet sich eine aus Kunststoff bestehende Deckschicht 19 mit einer Dicke von etwa 0,075 mm.

Wie dies vorstehend dargelegt wurde, wird die Karte 1, welche aus den Schichten 11, 11a, 12 bis 19 besteht, mittels Laserstrahlen mit zwei kreisrunden Schnitten versehen, durch welche die Plättchen 2 bis zur Nichthaftschicht 14 von der Karte 1 getrennt werden. Diese Plättchen 2 bestehen somit aus mehreren Schichten, welche mit den Schichten 15 bis 19 identisch sind. Somit bestehen die Plättchen 2 aus einer Verbundfolie 25, welche an ihrer Unterseite mit einem Klebstoff versehen ist, aus einer Trägerschicht 26 für die Wirkstoffe, aus einer Funktionsschicht 27 mit den Wirkstoffen, aus einer Trägerschicht 28, welche an ihrer Oberseite bedruckt ist, und aus einer Deckschicht 29.

Aufgrund der Nichthaftschicht 14 können diese Plättchen 2 in einfacher Weise von der Karte 1 abgelöst werden. Da sie an ihrer Unterseite mit einem Klebstoff versehen sind, können sie an Personen, Geräten u.dgl. befestigt werden, um ihre Wirkungen zu entfalten.

Die Plättchen 2, welche einen Wirkstoff enthalten, können kreisrund, oval, polygonal und in Form von Figuren od.dgl. ausgebildet sein.

## Patentansprüche

1. Einrichtung für den Transport, den Vertrieb, die Aufbewahrung u.dgl. von mindestens einem Plättchen, welches ein Medium enthält, durch welches die physiologischen, medizinischen u.dgl. Eigenschaften von Lebewesen, insbesondere von Personen, bzw. die technischen, physikalischen, chemischen u.dgl. Eigenschaften von technischen Geräten, Stoffen, Materialien u.dgl. beeinflussbar sind, **gekennzeichnet durch** einen kartenförmigen Träger (1) aus Kunststoff, Karton, Papier od.dgl., auf welchem mindestens eines der Plättchen (2), welches an einer seiner beiden Flächen mit einer Klebeschicht versehen ist, von diesem leicht ablösbar befestigt ist.

2. Einrichtung nach Patentanspruch 1, **dadurch gekennzeichnet, dass** der Träger (1) die Form einer Kreditkarte aufweist.

3. Einrichtung nach einem der Patentansprüche 1 und 2, **dadurch gekennzeichnet, dass** der Träger (1) auf einer seiner beiden Oberseiten mit mindestens eine Ausnehmung versehen ist, innerhalb welcher sich das ablösbare Plättchen (2) befindet.

4. Einrichtung nach einem der Patentansprüche 1 bis 3, **dadurch gekennzeichnet, dass** am Träger mehrere Plättchen (2), insbesondere zwei Plättchen, leicht ablösbar befestigt sind.

5. Einrichtung nach einem der Patentansprüche 1 bis 4, **dadurch gekennzeichnet, dass** das mindestens eine Plättchen (2) kreisrund, oval, polygonal bzw. in Form einer Figur od.dgl. ausgebildet ist.

6. Einrichtung nach einem der Patentansprüche 3 bis 5, **dadurch gekennzeichnet, dass** der Träger (1) mit einer mittleren Schicht (14) ausgebildet ist, auf welcher die Klebeschicht des mindestens einen Plättchens (2) nur wenig haftet, wodurch dieses vom Träger (1) leicht ablösbar ist.

7. Einrichtung nach einem der Patentansprüche 1 bis 6, **dadurch gekennzeichnet, dass** das mindestens eine Plättchen (2) an seiner Oberseite mit einer Beschriftung, mit Symbolen, mit einer Grafik u.dgl. versehen ist.

8. Einrichtung nach einem der Patentansprüche 1 bis 7, **dadurch gekennzeichnet, dass** der Träger (1) an mindestens einer seiner Oberflächen mit einer Beschriftung, mit Symbolen, mit einer Grafik u.dgl. versehen ist.
